# EUROPÄISCHE PATENTANMELDUNG

(11) **EP 3 627 457 A1**
(43) Veröffentlichungstag der Anmeldung: **25.03.2020**
(21) Anmeldenummer: 18196392.7
(22) Anmeldetag: 24.09.2018
(51) Int. Cl.: G07C 9/00

(54) **ZUTRITTSYSTEM**

(71) Anmelder: HOPPE AG, 39011 Lana (BZ) (IT)
(72) Erfinder: Zeus, Christian Josef Stephan, 39020 Stilfs (BZ) (IT); Schuberth, Oliver, 39023 Laas (IT); Englert, Kilian Günther, 97453 Schonungen (DE); Pedross, Simon, 39027 Graun im Vinschgau (IT)
(74) Vertreter: Patentanwälte Olbricht Buchhold Keulertz

(57) **Zusammenfassung**

Ein Zutrittssystem (2) weist eine erste Betätigungshandhabe (6) zur Befestigung an einer Außenseite einer Tür (4), eine zweite Betätigungshandhabe (6) zur Befestigung an einer Innenseite der Tür (4), und ein Zutrittskontrollsystem mit mindestens einer Leseeinheit (10, 12) zum Auslesen eines Transponders (16) und mindestens eine Auswerteeinheit (14) auf, welche mit der mindestens einen Leseeinheit (10, 12) gekoppelt ist und dazu ausgebildet ist, einen ausgelesenen Transponder zu identifizieren. Das System ist dadurch gekennzeichnet, dass eine erste Leseeinheit (10) zur Anordnung an der Außenseite der Tür (4) und eine zweite Leseeinheit (12) zur Anordnung an der Innenseite der Tür (4) vorgesehen sind, und dass die mindestens eine Auswerteeinheit (14) dazu ausgebildet ist, zu ermitteln, ob sich ein über die erste Leseeinheit (10) und/oder die zweite Leseeinheit (12) ausgelesener und in der mindestens einen Auswerteeinheit (14) identifizierter Transponder (16) an der Innenseite oder der Außenseite der Tür (4) befindet und, bei an der Außenseite befindlichem, identifizierten Transponder (16), ein Türöffnungssignal zu generieren.

## Beschreibung

Die Erfindung betrifft ein Zutrittssystem, beispielsweise für eine Tür- oder Fensteröffnung, gemäß dem Oberbegriff von Anspruch 1.

Türblätter oder Fensterflügel verfügen über eine Schließmechanik um Gebäudeöffnungen, wie etwa Durchgänge oder Fensteröffnungen, sicher und zuverlässig gegen einen Zugriff von außen oder gegen Witterungseinflüsse zu verschließen. Das Betätigen der Schließmechanik kann von innen mittels einer Betätigungshandhabe erfolgen, wenn die Schließmechanik nicht verriegelt ist. Von außen erfolgt jedoch in der Regel eine Zugangskontrolle, um zu vermeiden, dass unbefugte Personen Zutritt erhalten. Hierfür werden herkömmliche mechanische Schlösser mit mechanischen Schlüsseln oder elektromechanische Schlösser auch mit elektronischen Schlüsseln, sogenannten Transpondern, in der Schließmechanik vorgesehen.

Elektromechanische Türschlösser werden motorisch entriegelt, nachdem ein Schlüssel (mechanisch oder elektronisch) erkannt wurde. Hierfür muss beispielsweise eine Schlüsselkarte oder ein mit einem entsprechenden Transponder versehener Schlüsselanhänger vor oder in die Nähe eines Lesegeräts gehalten werden. Wenn ein Benutzer in der Nähe der Tür oder des Fensters ist, kommt es demnach zu einer Entsperrung oder Entriegelung des elektromechanischen Türschlosses wenn der Transponder erkannt wird. Diese Entsperrung durch einfache Näherung mit einem Transponder ist nur dann gewünscht, wenn auch ein Austritt aus dem Gebäude oder dem Gebäudeteil erfolgen soll. Im Gegensatz dazu ist dies nicht gewünscht, wenn ein Transponder außerhalb des Gebäudes ist, jedoch kein Zutritt benötigt wird oder sich ein Transponder innerhalb des Gebäudes befindet und kein Austritt beabsichtigt ist. In diesem Fall wäre das elektromechanische Türschloss bei Erkennung eines Transponders ebenfalls entsperrt, selbst wenn kein Zutritt oder Austritt beabsichtigt ist.

Hieraus ergibt sich die Aufgabe ein System zur Prüfung der Zugriffsberechtigung vorzusehen, das die Sicherheit der Bedienung erhöht.

Hauptmerkmale der Erfindung sind im kennzeichnenden Teil von Anspruch 1 angegeben. Ausgestaltungen sind Gegenstand der Ansprüche 2 bis 14.

Es wird ein Zutrittssystem vorgeschlagen, das Zutrittssystem aufweisend eine erste Betätigungshandhabe zur Befestigung an einer Außenseite einer Tür, eine zweite Betätigungshandhabe zur Befestigung an einer Innenseite der Tür, und ein Zutrittskontrollsystem mit mindestens einer Leseeinheit zum Auslesen eines Transponders und mindestens einer Auswerteeinheit, welche mit der mindestens einen Leseeinheit gekoppelt ist und dazu ausgebildet ist, einen ausgelesenen Transponder zu identifizieren. Das Zutrittssystem ist dadurch gekennzeichnet, dass eine erste Leseeinheit zur Anordnung an der Außenseite der Tür und eine zweite Leseeinheit zur Anordnung an der Innenseite der Tür vorgesehen sind. Die Auswerteeinheit ist ferner dazu ausgebildet, zu ermitteln, ob sich ein über die erste und/oder die zweite Leseeinheit ausgelesener und in der mindestens einen Auswerteeinheit identifizierter Transponder an der Innenseite oder der Außenseite der Tür befindet und, bei an der Außenseite befindlichem, identifizierten Transponder, ein Türöffnungssignal zu generieren.

Eine Betätigungshandhabe ist als eine Einrichtung zu verstehen, die zum Öffnen und Schließen einer Tür oder eines Fensters dient. Die erste Betätigungshandhabe auf der Außenseite der Tür kann sich von der zweiten Betätigungshandhabe auf der Innenseite der Tür unterscheiden. Es kann sinnvoll sein, an der Außenseite eine starre, unbewegbare erste Betätigungshandhabe vorzusehen. Auf der Innenseite kann indes ein bewegbares Element der zweiten Betätigungshandhabe vorhanden sein. Dadurch kann bei entriegeltem Motorschloss oder dergleichen ein manuelles Öffnen erfolgen.

Eine Leseeinheit ist eine Einrichtung, die in der Lage ist, in einem von der Leseeinheit bestimmten Erfassungsbereich Transponder auszulesen. Zur Erfüllung dieser Aufgabe existieren verschiedene funkbasierte Techniken. Die betreffende Leseeinheit weist dazu eine oder mehrere geeignete Antennen und eine damit verbundene Funkschaltung auf. Es ist vorstellbar, dass die Leseeinheit ein kontinuierliches oder getaktetes Funksignal aussendet, welches eine stark begrenzte Reichweite aufweist. Diese Reichweite bildet den jeweiligen Erfassungsbereich um den Einbauort der Leseeinheit. Befindet sich ein Transponder in dem Erfassungsbereich, d.h. der Funkreichweite der Leseeinheit, kann dieser auf das ausgesendete Funksignal reagieren. Die Transponder können hierzu passiv ausgestaltet sein, so dass durch das Funksignal eine darin befindliche Schaltung mit Energie versorgt wird und einen gewünschten Datensatz an die Leseeinheit zurücksendet. In diesem Fall ist der Erfassungsbereich üblicherweise so gering, dass der Transponder praktisch auf die Leseeinheit aufgelegt oder sich dieser zumindest sehr dicht nähern muss. Es sind auch aktive Transponder denkbar, die direkt nach Erhalt eines Funksignals eine Identifikation aussenden oder nach Betätigen eines Eingabemittels, zum Beispiel eines Tastknopfs, auf ein Funksignal antworten. Für eine bequeme Handhabung kann es sich anbieten, die Leseeinheiten und die Transponder derart aufeinander abzustimmen, dass eine Reichweite von mehreren Dezimetern bis zu etwas mehr als einem Meter erreicht werden kann. Dies erlaubt einem Benutzer, einen Transponder lediglich mit sich zu führen, wenn er sich der Tür bzw. der entsprechenden Betätigungshandhabe nähert.

Die mindestens eine Auswerteeinheit kann ein Elektronikgerät sein, welches dazu ausgebildet sein könnte, eingelesene Daten eines Transponders zu empfangen und zum Zwecke der Zutrittskontrolle zu verarbeiten. Jede Leseeinheit könnte mit einer eigenen, integrierten Auswerteeinheit versehen sein. Dann bietet es sich an, beide Auswerteeinheiten miteinander zu koppeln, um ermitteln zu können, auf welcher Seite der Tür sich ein eingelesener Transponder befindet. Die Kopplung kann drahtgebunden oder drahtlos durchgeführt werden. Es kann sich jedoch auch anbieten, eine einzelne Auswerteeinheit zu verwenden, die mit beiden Leseeinheiten gekoppelt ist. Die Auswerteeinheit kann sich an der Innenseite der Tür, gänzlich innerhalb der Tür, neben der Tür oder an einem anderen, zentralen Einbauort in dem betreffenden Gebäude befinden. Aus Sicherheitsgründen ist es sinnvoll, die Auswerteeinheit nicht an der Außenseite der Tür zu platzieren.

Das Zutrittskontrollsystem ist folglich dazu vorgesehen, über die erste Leseeinheit und/oder die zweite Leseeinheit einen in der Nähe der jeweiligen Leseeinheit befindlichen Transponder auszulesen und zu identifizieren. Dies bedeutet, dass geprüft wird, ob es sich bei dem Transponder um einen dem System vorher bekanntgegebenen und zutrittsberechtigten Transponder handelt. Wird ein solcher erkannt, ist eine grundsätzliche Berechtigung zur Öffnung der Tür vorhanden.

Erfindungsgemäß wird jedoch vor dem Generieren des Türöffnungssignals zum Öffnen der Tür zunächst eine Untersuchung vorgenommen, wo sich ein zutrittsberechtigter Transponder befindet. Die Auswerteeinheit kann dazu ausgebildet zu sein, einen zutrittsberechtigten Transponder an der Innenseite zu ignorieren. Ist der Transponder ein durch Knopfdruck oder eine andere Betätigung aktivierbarer Transponder kann dies eine Situation betreffen, in der ein Transponder gerade noch aktiv ist und ein Türöffnungssignal zum Öffnen der Tür von außen bereits ausgelöst hat. Befindet er sich anschließend an der Innenseite der Tür kann dies kein erneutes Türöffnungssignal auslösen. Nähert sich allerdings ein zutrittsberechtigter Transponder an der Außenseite der Tür, kann dieser die Generierung eines Türöffnungssignals auslösen.

Zur Ermittlung der Position des Transponders kann es sinnvoll sein, die Abstände zwischen dem Transponder und beiden Leseeinheiten zu ermitteln. Durch anschließendes Vergleichen der beiden Abstände wird unmittelbar deutlich, zu welcher der beiden Leseeinheiten der betreffende Transponder dichter positioniert ist. Ist der zu der ersten Leseeinheit ermittelte Abstand geringer als zu der zweiten Leseeinheit, ist davon auszugehen, dass sich der Transponder an der Außenseite befindet. Ist der Abstand zu der zweiten Leseeinheit geringer, ist davon auszugehen, dass sich der Transponder an der Innenseite der Tür befindet.

Für eine solche Abstandsmessung ist zudem sinnvoll, Antennen und Funkschaltungen der Leseeinheiten identisch aufzubauen, um systematische Fehlerquellen zu vermeiden. Der Abstand kann durch Auswertung der gemessenen Feld- oder Signalstärke des Antwortsignals des Transponders an den Leseeinheiten ermittelt werden. Alternativ dazu kann eine Signallaufzeit zwischen einer jeweiligen Leseeinheit und dem Transponder ermittelt werden. Werden zwei unabhängige Auswerteeinheiten verwendet, könnte jede dieser dazu ausgebildet sein, eine Feldstärke oder eine Laufzeit zu messen. Eine einzelne Auswerteeinheit könnte jedoch zur Vermeidung von Fehlern bevorzugt werden. Es ist auch denkbar, jede Leseeinheit mit einer entsprechenden Schaltung auszustatten, die eine Entfernungsmessung ermöglicht. Die gemessenen Werte beider Auswerteeinheiten oder die daraus ermittelten Abstandswerte können in einer der beiden Auswerteeinheiten verglichen werden oder an eine weitere, nur diesem Zweck dienende Auswerteeinheit übertragen werden. Es kann sinnvoll sein, lediglich über eine der Leseeinheiten tatsächlich einen Transponder einzulesen, während die andere der Leseeinheiten, insbesondere die zweite, ausschließlich dazu vorgesehen sein könnte, die Abstandsmessung durchzuführen.

Folglich bildet das erfindungsgemäße Zutrittssystem eine sehr bequeme Möglichkeit, ein unbeabsichtigtes Öffnen einer Tür zu verhindern, die über ein Motorschloss oder ähnliche Einrichtung verschließbar ist.

Bevorzugt ist die mindestens eine Auswerteeinheit dazu ausgebildet, den Abstand durch Auswertung einer gemessenen Signalstärke oder Signallaufzeit eines Antwortsignals des Transponders an den Leseeinheiten zu ermitteln.

Bevorzugt sind die erste Leseeinheit und die zweite Leseeinheit mit einer gemeinsamen Auswerteeinheit gekoppelt. Dadurch wird zum einen die Komplexität des Systems gesenkt. Zum anderen kann direkt in der gemeinsamen Auswerteeinheit durch Vergleich von Feld- bzw. Signalstärken oder Signallaufzeiten eine Ermittlung des Orts des Transponders erfolgen.

Bevorzugt unterscheiden sich die Einbauhöhen der ersten Leseeinheit und der zweiten Leseeinheit um höchstens 7 cm voneinander. Ein zu großer vertikaler Versatz der beiden Leseeinheiten könnte zu einer ungenauen Bestimmung des Orts des Transponders führen. Es wäre bei einem solchen möglich, dass ein Transponder an der Außenseite der Tür dichter an die zweite Leseeinheit herangeführt werden könnte als an die erste Leseeinheit. Dann würde fälschlicherweise der Transponder als an der Innenseite der Tür befindlich lokalisiert werden.

Bevorzugt unterscheiden sich daher die Einbauhöhen der ersten Leseeinheit und der zweiten Leseeinheit um höchstens 5 cm.

In einer vorteilhaften Ausführungsform ist die erste Leseeinheit in die erste Betätigungshandhabe integriert. Der Aufbau des erfindungsgemäßen Zutrittssystems ist dadurch besonders schlank und raumsparend. Da üblicherweise Türgriffe oder ähnliche Einrichtungen Hohlräume aufweisen, können diese zur Unterbringung einer Leseeinheit verwendet werden. Eine erforderliche Leitungslänge zum Anschließen oder Koppeln der ersten Leseeinheit ist dadurch weiterhin sehr gering.

Bevorzugt weist die erste Leseeinheit eine aktive Fläche auf, die in einem Ausschnitt der ersten Betätigungshandhabe liegt und bündig mit einer Außenfläche der ersten Betätigungshandhabe abschließt. Die Reichweite und damit der erste Erfassungsbereich können damit präzise eingestellt und störungsfrei realisiert werden.

Selbstverständlich kann auch die zweite Leseeinheit in die zweite Betätigungshandhabe integriert sein, wie weiter nachfolgend dargelegt ist.

In einer weiter vorteilhaften Ausführungsform ist ein mit der mindestens einen Auswerteeinheit gekoppelter Sensor zum Erfassen eines Objekts, das sich in einem durch den Sensor definierten dritten Erfassungsbereich befindet, in die erste Betätigungshandhabe integriert, wobei der Sensor an einem ersten Abschnitt der ersten Betätigungshandhabe angeordnet ist und sich der dritte Erfassungsbereich von dem ersten Abschnitt nach außen erstreckt, und wobei die mindestens eine Auswerteeinheit dazu ausgebildet ist, zum Generieren des Türöffnungssignals den Sensor zu aktivieren und das Türöffnungssignal erst nach Erfassen eines Objekts in dem dritten Erfassungsbereich auszusenden. Folglich ist der Sensor in der Betätigungshandhabe so angeordnet, dass ein dritter Erfassungsbereich gebildet ist, der sich von der Betätigungshandhabe nach außen erstreckt. Der Sensor weicht in seiner Funktion jedoch deutlich von der Funktion einer der Leseeinheiten ab und ist lediglich dazu vorgesehen, ein Objekt in dem dritten Erfassungsbereich zu erkennen. Der dritte Erfassungsbereich kann sich bevorzugt von dem ersten Erfassungsbereich unterscheiden, insbesondere in der räumlichen Ausrichtung relativ zu der Betätigungshandhabe. Das Vorbeiführen eines Objekts, zum Beispiel eines Fußes, ist damit eine Eingabe eines Steuerbefehls, der letztendlich zu der Öffnung der Tür führen kann. Entscheidet die mindestens eine Auswerteeinheit, dass ein an der Außenseite befindlicher Transponder die Öffnung der Tür durchführen darf, dann wird der Sensor zum tatsächlichen Einleiten der Türöffnung aktiviert.

In einer vorteilhaften Ausführungsform ist die erste Betätigungshandhabe zumindest abschnittsweise stangenförmig ausgebildet und weist ein erstes Ende und ein dem ersten Ende gegenüberliegendes zweites Ende auf, wobei sich der erste Abschnitt an dem ersten Ende befindet. Die erste Betätigungshandhabe kann demnach im Wesentlichen die Form eines Stangengriffs oder Bügelgriffs aufweisen, welcher sich über eine mehr oder weniger ausgeprägte Länge an der Tür erstreckt. Oftmals sind diese Arten von Betätigungshandhaben vertikal ausgerichtet, so dass ein erstes Ende ein unteres Ende eines solchen Stangengriffs sein kann, während das zweite Ende vertikal oberhalb angeordnet ist. Der erste Abschnitt kann derart an dem ersten Ende angeordnet sein, dass der erste Abschnitt und das erste Ende zusammenfallen. Ist die erste Betätigungshandhabe vertikal anzuordnen, kann der Sensor nach unten gerichtet sein. Der dritte Erfassungsbereich kann sich folglich zu einem Boden vor der Tür hin erstrecken. Ist die erste Betätigungshandhabe jedoch beispielsweise horizontal anzuordnen, kann sich der dritte Erfassungsbereich auch quer dazu erstrecken und dennoch zum Boden gerichtet sein. Allerdings sind auch weitere Varianten möglich, bei denen der dritte Erfassungsbereich und die Ausrichtung der ersten Betätigungshandhabe voneinander unabhängig, wählbar oder einstellbar sind.

Bevorzugt weist die erste Betätigungshandhabe eine Haupterstreckungsachse auf und der dritte Erfassungsbereich verläuft parallel zu der Haupterstreckungsachse. Der Sensor befindet sich folglich bevorzugt an einem Ende der ersten Betätigungshandhabe und ist so ausgerichtet, dass eine Sensorachse weitgehend parallel zu der Haupterstreckungsachse liegt. Ein zu erfassendes Objekt ist daher insbesondere in einem Abstand zu dem betreffenden Ende in Verlängerung der Haupterstreckungsachse vorbei zu führen. Dies kann sich insbesondere auf eine stangenförmige Ausbildung der ersten Betätigungshandhabe beziehen.

Der Sensor könnte in einer vorteilhaften Ausführungsform als Ultraschallsensor ausgeführt sein. Ein solcher sendet Schallwellen im Ultraschallbereich aus, die an Objekten reflektiert werden, welche sich in dem dritten Erfassungsbereich befinden. Durch Ermittlung einer Laufzeit der reflektierten Schallwellen kann der Abstand zu dem die Schallwellen reflektierenden Objekt ermittelt werden. In bestimmten Einbausituationen kann sich in dem dritten Erfassungsbereich stets eine Boden- oder Wandfläche befinden, die bei Aktivierung des Sensors stets die Schallwellen reflektiert. Der Sensor, die mindestens eine Auswerteeinheit oder eine andere, übergeordnete Komponente, könnte durch Anpassung einer Schaltung oder einer Programmierung derart ausgebildet werden, dass diese Reflexion nicht als das zu erfassende Objekt interpretiert wird. Wird ein anderes Objekt in den dritten Erfassungsbereich bewegt, das sich dann zwischen dem Sensor und der betreffenden Wand- oder Bodenfläche befindet, werden die ermittelten Laufzeiten geringer. Diese temporäre Abnahme der Laufzeit sollte dann als das zu erfassende Objekt interpretiert werden.

Statt eines Ultraschallsensors können auch andere Varianten eingesetzt werden. Diese könnten etwa eine Kamera, einen Infrarotsensor, einen optischen Flusssensor, einen Laserscanner oder dergleichen umfassen.

Der Sensor könnte zumindest teilweise aus der ersten Betätigungshandhabe herausragen. Hierzu kann die erste Betätigungshandhabe in dem ersten Abschnitt etwa einen Ausschnitt oder eine Öffnung aufweisen, in die der Sensor eingepasst ist. Das Erfassungsverhalten des Sensors kann dann etwa ausschließlich durch seine Bauform bedingt werden und wird von einer eventuellen Einbausituation nicht beschränkt. Durch das Herausragen kann zudem eine Reinigung oder Wartung vereinfacht werden.

In einer bevorzugten Ausführungsform ist die erste Leseeinheit in einem ersten Gehäuse angeordnet und bildet eine erste Baueinheit. Die erste Leseeinheit kann eine Vielzahl von einzelnen Komponenten aufweisen, die beispielsweise eine Steuereinheit, eine oder mehrere Antennen, Signalelektronik und dergleichen aufweist. Die erste Leseeinheit kann als ein Elektronikmodul bereitgestellt sein, welches beispielsweise auf einer Platine angeordnet und mit externen Komponenten über elektrische Leitungen verbindbar ist. Die erste Leseeinheit kann zum Schutz der einzelnen Komponenten, zur Vereinfachung der Montage und zur Erhöhung der Robustheit in dem ersten Gehäuse angeordnet und gekapselt werden. Die erste Leseeinheit bildet dann eine einzelne Komponente, die insbesondere an oder in der ersten Betätigungshandhabe integrierbar ist.

Bevorzugt ist die erste Leseeinheit in dem ersten Gehäuse in ein Harz eingegossen. Damit wird eine besonders hohe Robustheit gegenüber äußeren physikalischen Einflüssen gewährleistet und eine lange Lebensdauer erreicht.

In einer bevorzugten Ausführungsform ist die erste Leseeinheit an einen Hohlraum der ersten Betätigungshandhabe angepasst. Die erste Leseeinheit bzw. das erste Gehäuse ist folglich derart dimensioniert, dass das erste Gehäuse bevorzugt vollständig in den Hohlraum eingesteckt werden kann. Die Anpassung kann durch Auswählen eines äußersten Querschnitts der ersten Leseeinheit geschehen, der geringfügig kleiner ist als der Querschnitt des Hohlraums. Durch die Integration in die erste Betätigungshandhabe wird die äußere Erscheinung der ersten Betätigungshandhabe nicht gestört und die erste Leseeinheit ist mechanisch sehr gut geschützt.

In einer vorteilhaften Ausführungsform sind der Sensor und die erste Leseeinheit über ein Kabel miteinander verbunden, wobei das Kabel eine Zweigleitung aufweist, die mit der zweiten Leseeinheit gekoppelt ist. Die Verbindung zwischen den einzelnen Komponenten kann folglich über eine Art Y-förmig aufgebautes Kabel durchgeführt werden, welches sich von dem Sensor zu der ersten Leseeinheit und zu der zweiten Leseeinheit erstreckt. Sämtliche Komponenten können über dieses Kabel mit ausreichend elektrischer Leistung versorgt werden. Sie können ferner darüber an eine gemeinsame Auswerteeinheit und/oder ein Motorschloss oder andere Komponenten angeschlossen werden. Die Kopplung mit der zweiten Leseeinheit kann direkt oder indirekt über eine dazwischengeschaltete Komponente erfolgen, etwa über das Motorschloss.

Die erste Betätigungshandhabe kann ferner eine Leuchteinheit aufweisen, die während des Vorgangs des Erfassens Licht in Richtung des dritten Erfassungsbereichs abgibt. Es wird damit die Möglichkeit geschaffen, einem Benutzer zu signalisieren, dass eine Geste oder dergleichen in dem dritten Erfassungsbereich erwartet wird, um das Türöffnungssignal freizugeben bzw. auszusenden.

Bevorzugt ist die Leuchteinheit mit dem Sensor gekoppelt. Die Leuchteinheit gibt folglich nur dann Licht ab, wenn der Sensor aktiviert ist und auf eine entsprechende Eingabe gewartet wird. Eine separate Ansteuerung entfällt.

In einer besonders vorteilhaften Ausführungsform bündelt eine Linse das von der Leuchteinheit abgegebene Licht zum Ausbilden eines Lichtflecks. Durch die Bündelung kann ein Lichtfleck erzeugt werden, der an eine Boden- oder Wandfläche projiziert wird. Die Aufmerksamkeit eines Benutzers kann durch den Lichtfleck auf die Wand- oder Bodenfläche gerichtet werden. Die Linse kann farbig oder farblos transparent gestaltet sein. Es bietet sich an, einen Lichtfleck mit einem Durchmesser von bis zu 20 cm an der betreffenden Fläche zu generieren, der leicht erkennbar ist. Bevorzugt kann der Lichtfleck einen Durchmesser von bis zu 12 cm aufweisen. Die Leuchteinheit kann weiterhin so ausgebildet sein, dass der Lichtfleck bei Tageslicht erkennbar ist. Es ist zudem vorteilhaft, die Kontur des Lichtflecks scharf gegenüber dem Hintergrund abzugrenzen.

Die Leuchteinheit ist besonders bevorzugt dazu ausgebildet, einen Leuchtkegel auszusenden. Bevorzugt umschließt der dritte Erfassungsbereich vollständig den Leuchtkegel.

Der Sensor und die Leuchteinheit sind bevorzugt in einem zweiten Gehäuse angeordnet und bilden eine zweite Baueinheit. Da die Funktion des Sensors und der Leuchteinheit in einem bevorzugten Fall miteinander gekoppelt sind, ist es sinnvoll, diese Funktionen in eine einzelne Baueinheit zu integrieren. Die Leuchteinheit kann dann auch einfach direkt mit dem Sensor gekoppelt werden. Der dritte Erfassungsbereich und ein von der Leuchteinheit ausgesandter Leuchtkegel können dann ebenso leicht aufeinander angepasst werden. Die zweite Baueinheit kann vollständig gekapselt werden, um etwa in die erste Betätigungshandhabe integriert zu werden. Dies vereinfacht die Montage und reduziert die notwendigen Schritte zum elektrischen Kontaktieren der Leuchteinheit.

Das zweite Gehäuse ist zudem in einer vorteilhaften Ausführungsform an einen Hohlraum der ersten Betätigungshandhabe angepasst. Je nach Ausführung dieser kann ein Stangengriff oder eine ähnliche Einrichtung vorliegen, welche nicht massiv, sondern als Hohlkörper ausgeführt ist. Da eine Integration des Sensors und der Leuchteinheit in der ersten Betätigungshandhabe vorgesehen ist, kann es sinnvoll sein, diese Komponenten direkt in den Hohlraum einzubringen. Durch eine geeignete Ausgestaltung des zweiten Gehäuses lässt sich dieses bzw. die zweite Baueinheit vollständig in den Hohlraum der ersten Betätigungshandhabe einschieben, um sie dort zu befestigen.

Das zweite Gehäuse weist bevorzugt eine Nut zum Aufnehmen eines Dichtungsrings auf. Die Nut ist bevorzugt umlaufend ausgestaltet und ein Dichtungsring ist korrespondierend hierzu auszuformen. Je nach Ausführung der ersten Betätigungshandhabe können sich hier selbstverständlich unterschiedliche Formen für die Nut und den Dichtring ergeben.

In dem zweiten Gehäuse kann ein Projektionsfenster vorgesehen sein. Dieses könnte sich dann in Richtung der Linse oder der Leuchteinheit befinden und das Durchtreten von Lichtstrahlen erlauben. Das Projektionsfenster kann mit einer bestimmten Kontur versehen sein, die die Kontur des Lichtflecks auf gewünschte Weise beeinflusst.

Der Sensor kann ferner eine Sensorschaltung aufweisen, die dazu ausgebildet ist, eine vorgegebene Bewegung aus von dem Sensor gelieferten Sensorsignalen zu erkennen. Die Sensorschaltung könnte nach Erfassung etwa eine Art Bestätigungssignal an die mindestens eine Auswerteeinheit senden, welche dann das Türöffnungssignal sendet. Je nach Ausführung des Sensors können mehr oder weniger komplexe Bewegungsabläufe festgestellt werden. Ist der Sensor als Ultraschallsensor ausgebildet, welcher lediglich einen Abstand zu einem Objekt ermittelbar macht, kann ein zeitlich begrenztes Eintreten eines Objekts in den dritten Erfassungsbereich erkannt werden. Dies bedeutet, dass der Sensor in einem Erfassungszeitraum zunächst kein Objekt erkennt, anschließend für eine gewisse Dauer ein Objekt erfasst, wonach anschließend wiederum kein Objekt mehr erkannt wird. Dies kann etwa dem Führen einer Hand oder eines Fußes durch den dritten Erfassungsbereich entsprechen. Die Sensorschaltung ist dazu ausgebildet, ein entsprechendes Signal weiterzugeben, falls eine solche Bewegung erkannt wird. Es ist nicht notwendig, sämtliche Messdaten unverarbeitet an die mindestens eine Auswerteeinheit weiterzuleiten.

In einer vorteilhaften Ausführungsform ist/sind die erste Leseeinheit und/oder der Sensor durch Festklemmen in einem Hohlraum der ersten Betätigungshandhabe befestigt. Durch das Festklemmen sind keine dedizierten Befestigungsvorrichtungen notwendig und der Querschnitt der ersten Betätigungshandhabe kann in weiten Bereichen flexibel gewählt werden, ohne eine Vielzahl von unterschiedlichen Ausformungen von erster Leseeinheit und/oder Sensor zu erfordern. Bevorzugt ist ein die erste Leseeinheit oder den Sensor umgebendes Gehäuse festklemmbar. In einem besonders vorteilhaften Fall könnte das betreffende Gehäuse mindestens eine Gewindebohrung aufweisen, in die ein Schraubkörper eingeschraubt ist. Durch Drehen des Schraubkörpers derart, dass dieser aus der Gewindebohrung herausgeschraubt wird, kann die lichte Weite der Kombination aus Gehäuse und Schraubkörper vergrößert werden. Befindet sich das Gehäuse zusammen mit dem Schraubkörper im Innern der ersten Betätigungshandhabe, führt dies unweigerlich zum Festklemmen des Gehäuses. Eine Betätigung des Schraubkörpers könnte über eine durchgehende Bohrung erfolgen, die in der ersten Betätigungshandhabe angeordnet ist. Bevorzugt ist diese auf einer Seite angeordnet, die im installierten Zustand an der Tür vom Benutzer nicht sichtbar ist. Eine derartige Ausgestaltung zum Klemmen hat zudem den Vorteil, dass Montage und Entnahme sehr leicht durchführbar ist. Es könnte sich anbieten, im Innern der ersten Betätigungshandhabe eine Art Absatz oder einen Anschlag vorzusehen, über den hinaus das betreffende Gehäuse nicht in den Hohlraum hineingeschoben werden kann. Die Ausrichtung des Schraubkörpers und der durchgehenden Bohrung kann dadurch erleichtert werden.

In einer vorteilhaften Ausführungsform weist die erste Betätigungshandhabe folglich Durchgangsbohrungen zum Einführen eines Werkzeugs in den Hohlraum zum Antreiben von Schrauben zum Festklemmen oder zum Lösen der ersten Leseeinheit und/oder des Sensors auf.

Die zweite Betätigungshandhabe, welche an der Innenseite der Tür anzubringen ist, kann zur Erhöhung der Flexibilität ihres Aufbaus eine modulare Funktionsbaugruppe mit einem Träger aufweisen, der mehrere Aufnahmeabschnitte zum Aufnehmen zumindest einer Lagereinrichtung zum Lagern eines Griffteils, mindestens eines Verkleidungselements und der zweiten Leseeinheit aufweist. Der Träger der modularen Funktionsbaugruppe kann als mechanische Basis verstanden werden, die unterschiedliche Module aufnehmen kann und ihre Funktionen miteinander in Form der kompakten Funktionsbaugruppe kombiniert. Zum Aufnehmen der verschiedenen Module weist der Träger mindestens einen Aufnahmeabschnitt auf, der auf mindestens ein aufzunehmendes Modul abgestimmt und entsprechend positioniert ist. Die Aufnahmeabschnitte können in Form von Vertiefungen, Ausnehmungen, Vorsprüngen, Stegen, Flanschen, Bohrungen oder ähnlichen Formmerkmalen realisiert sein. Je nach Wunsch können unterschiedliche zweite Leseeinheiten oder Lagereinrichtungen vorgesehen werden, welche nach Kundenwünschen, länderspezifischen Vorlieben oder Sicherheitsstufen bzw. verwendeten Motorschlössern auswählbar sind.

Der Träger kann direkt, über einen Deckel, eine Adapterplatte oder ähnliches an der Tür befestigt werden. Das mindestens eine Verkleidungselement deckt bevorzugt den Träger und sämtliche daran befindlichen Module ab, um eine formschöne äußere Gestalt der zweiten Betätigungshandhabe zu erreichen. Durch die Verwendung des Trägers und eines den Träger abdeckenden Verkleidungselements ist die Form der zweiten Betätigungshandhabe nicht direkt von der Größe und Ausgestaltung der einzelnen Komponenten abhängig.

Die zweite Betätigungshandhabe weist bevorzugt auf einer Befestigungsseite eine Öffnung zum Durchführen eines Kabels auf, durch das die in der zweiten Betätigungshandhabe angeordnete zweite Leseeinheit unter anderem mit der ersten Leseeinheit verbindbar ist. Je nach Art und Ausführung der ersten Betätigungshandhabe und der zweiten Betätigungshandhabe und je nach Art und Ausführung der mindestens einen Auswerteeinheit kann auch eine Verbindung zu einer Auswerteeinheit erfolgen, die sich in der zweiten Betätigungshandhabe oder der ersten Betätigungshandhabe oder einem davon gänzlich beabstandeten Ort befindet.

In einer vorteilhaften Ausführungsform weist der Träger einen ersten Ausschnitt zum Durchführen eines Antriebsstifts auf, der mit dem Griffteil verbindbar ist. Der erste Ausschnitt erlaubt, einen mit dem Griffteil verbundenen oder verbindbaren Antriebsstift von einer Seite durch den Träger durchzuführen. Der Träger ist daher in der Lage, auf einer Seite beispielsweise die Lagereinrichtung anzuordnen, während auf einer gegenüberliegenden Seite des Trägers ein Antriebsstift zu einer von dem Griffteil abgewandten Seite geführt werden kann. Dort könnte ein Motorschloss angeordnet sein, das einen Eingang für einen Antriebsstift aufweist. Je nach Aufbau und Anordnung der einzelnen Komponenten könnte auch eine Rückholfeder oder dergleichen vorhanden sein, die mit dem Antriebsstift verbindbar ist.

Bevorzugt weist die Lagereinrichtung einen Lagerrahmen auf, an dem zumindest auf einer Seite ein Stiftlager angeordnet ist, welches sich von dem Lagerrahmen nach außen erstreckt und in dem ein erster Antriebsstift zugfest mit dem Stiftlager verbindbar ist. Der Lagerrahmen kann mit dem Träger so verbunden werden, dass die Lagerachse, d.h. die Mittelachse des Stiftlagers, mit der Mittelachse des ersten Ausschnitts zusammenfällt. Der erste Antriebsstift kann so mit dem Stiftlager verbunden werden, dass er durch Aufbringen einer Zugkraft nicht aus dem Stiftlager herausgelöst werden kann. Ferner kann vorgesehen sein, dass ein Griffteil ebenso zugfest an dem ersten Antriebsstift anbringbar ist. Der erste Antriebstift kann wie bei gängigen Antriebsstiften einer bewegbaren Betätigungshandhabe als ein Mehrkant ausgeführt sein, insbesondere als ein Vierkant. Durch Anbringen des Griffteils kann folglich dieses mittels des Stiftlagers gelagert werden und Drehmoment in Richtung des Trägers leiten. Die Rückseite des Stiftlagers könnte in einem besonderen Fall einen Kupplungsabschnitt aufweisen, der zur Aufnahme eines weiteren Antriebsstifts ausgebildet ist. Alternativ dazu wäre denkbar, den ersten Antriebsstift derart auszuführen, dass er sich vollständig durch die zweite Betätigungshandhabe erstreckt und außerhalb dieser mit einem Motorschloss verbindbar ist.

In einer bevorzugten Ausführungsform ist der Lagerrahmen als mehrfach abgekantetes Blech ausgeführt, wobei der erste Aufnahmeabschnitt des Trägers dazu korrespondierend ausgestaltet ist, um den Lagerrahmen flächenbündig aufzunehmen. Der erste Aufnahmeabschnitt könnte insbesondere als ein Vorsprung ausgeführt sein, der zumindest bereichsweise eine Umfangsfläche aufweist, die an eine Innenkontur des Lagerrahmens angepasst ist. Die Umfangsfläche könnte zudem von federnden Elementen durchsetzt sein, die beim Aufschieben oder Aufstecken des Lagerrahmens einfedern und hierbei eine Vorspannung auf eine Innenfläche des Lagerrahmens aufbringen. Es wäre allerdings auch denkbar, dass der Lagerrahmen zumindest bereichsweise eine Hinterschneidung aufweist, die mit Ausnehmungen in einer Mantelfläche oder Umfangsfläche des Vorsprungs korrespondieren, so dass sie nach aufschieben oder aufstecken des Lagerrahmens in diese einschnappen. Hierdurch kann zumindest eine temporäre Halterung des Lagerrahmens an dem Träger erfolgen. Eine endgültige Befestigung könnte durch separate, dedizierte Schrauben erfolgen. Alternativ dazu können Schrauben eingesetzt werden, die nach dem Zusammenstecken sämtlicher Komponenten der zweiten Betätigungshandhabe diese gemeinsam verspannen bzw. zusammenhalten.

In einer vorteilhaften Ausführungsform ist der erste Aufnahmeabschnitt als Vorsprung ausgeführt und der Lagerrahmen umschließt den ersten Aufnahmeabschnitt zumindest teilweise. Der Lagerrahmen kann sich dadurch gut an den Vorsprung anschmiegen und bildet im Bereich des ersten Aufnahmeabschnitts eine mechanisch robuste Anordnung aus.

Das Stiftlager kann eine radial um die Mittelachse verlaufende, zumindest teilzylindrische Fläche aufweisen, die sich von dem Lagerrahmen in Richtung des Griffteils erstreckt. Innerhalb dieses Abschnitts kann das eigentliche Lager angeordnet sein, so dass sich der gesamte Lagerrahmen aus einem einzelnen Blech herstellen lässt und gleichzeitig ein formschöner Abschluss für den Benutzer sichtbar ist. Das separate Herstellen und Anordnen eines Stiftlagers sowie dessen Befestigung in dem Lagerrahmen kann eingespart sein. Die notwendige Teilevielfalt wird reduziert und die Montage erleichtert.

Auf einer dem Griffteil abgewandten Seite des Trägers kann die zweite Leseeinheit angeordnet werden. Hierdurch ist sie von der Bedienseite der zweiten Betätigungshandhabe abgewandt und wird folglich zwischen dem Träger und der Tür, an der die zweite Betätigungshandhabe schließlich befestigt wird, geschützt. Eine zusätzliche Kapselung der zweiten Leseeinheit ist dadurch bei ausreichend robuster Dimensionierung des Trägers nicht erforderlich. Dies betrifft die zweite Betätigungshandhabe bei einer Installationsposition an der Innenseite der Tür, bei der keine besonders wasserdichte Ausführung erforderlich ist. Die zweite Leseeinheit könnte in einer möglichen Ausführung, wie vorangehend bereits erwähnt, lediglich zur Abstandsmessung eingesetzt werden.

Durch die Installation der zweiten Betätigungshandhabe kann sich eine Installationshöhe ergeben, die insbesondere aus ergonomischen Gesichtsgründen gängig bzw. genormt ist. Hieraus kann sich die Installationshöhe der ersten Leseeinheit an der Außenseite der Tür ergeben, die im Wesentlichen keinen vertikalen Versatz zu der zweiten Leseeinheit aufweisen sollte. Ein horizontaler Versatz sollte ebenso weitgehend ausgeschlossen werden. Dies kann jedoch durch die gängige Praxis erreicht werden, Innentürgriffe und Außentürgriffe im Wesentlichen in fluchtender Installationsposition anzuordnen.

Bevorzugt ist die zweite Leseeinheit oberhalb des ersten Ausschnitts an dem Träger angeordnet. Bei Leseeinheiten, die eine geringere Reichweite aufweisen, könnte an der dem Benutzer zugewandten Seite eine Markierung angeordnet werden, an die der Transponder zu halten ist. Bei der Anordnung der zweiten Leseeinheit oberhalb des ersten Ausschnitts fallen der dem Benutzer zugewandte Bereich und der Einbauort der zweiten Leseeinheit nahezu zusammen.

In einer vorteilhaften Ausführungsform weist die zweite Betätigungshandhabe eine optische Indikationseinrichtung auf, die mit der zweiten Leseeinheit und/oder der mindestens einen Auswerteeinheit gekoppelt ist und dazu ausgebildet ist, beim Einlesen und/oder beim Identifizieren eines Transponders eine optische Indikation abzugeben. Insbesondere könnte diese zusammen mit der zweiten Leseeinheit auf einer gemeinsamen Platine angeordnet und zu dem Griffteil gerichtet sein. Beim Identifizieren eines zutrittsberechtigten Transponders kann ein Lichtsignal abgegeben werden. Befindet sich die zweite Leseeinheit oberhalb des ersten Ausschnitts kann das abgegebene Lichtsignal folglich auf einer dem Benutzer zugewandten Seite oberhalb des Griffteils aus der zweiten Betätigungshandhabe herausscheinen und dem Benutzer unmittelbar eine Rückmeldung darüber geben, dass ein Transponder identifiziert wird.

Es ist weiterhin vorstellbar, dass die zweite Betätigungshandhabe eine (weitere) optische Indikationseinrichtung aufweist, die mit dem vorangehend genannten Sensor gekoppelt ist und dazu ausgebildet ist, bei aktiviertem Sensor eine optische Anzeige vorzunehmen. Die Kopplung mit dem Sensor kann auch durch eine Kopplung mit der mindestens einen Auswerteeinheit realisiert sein, die ein entsprechendes Signal zur Aktivierung des Sensors ausgibt, etwa das Türöffnungssignal. Allerdings kann die Auswerteeinheit den Sensor vollständig ansteuern, d.h. einschalten, abschalten und eine Signal- oder Datenverbindung vornehmen.

Bevorzugt weist das mindestens eine Verkleidungselement ein erstes Verkleidungselement auf, welches eine dem Griffteil zugewandte Oberfläche vollständig umschließt. Das erste Verkleidungselement kann folglich als mechanischer Abschluss der zweiten Betätigungshandhabe fungieren.

Das erste Verkleidungselement könnte aus einem metallischen Material ausgebildet sein und ein oberhalb der Lagereinrichtung angeordnetes Fenster aufweisen. Die metallische Ausführung erhöht die mechanische Robustheit gegenüber von Stößen und anderen versehentlichen oder absichtlichen Einwirkungen. Durch das Fenster wird der Erfassungsbereich der zweiten Leseeinheit zumindest in einer zu dem Benutzer hin gewandten Richtung nicht abgeschirmt.

In einer vorteilhaften Ausführungsform weist das mindestens eine Verkleidungselement ein zweites Verkleidungselement auf, das zumindest teilweise aus einem Kunststoff ausgebildet ist und an einer dem Griffteil zugewandten Seite des ersten Verkleidungselements angeordnet ist. Die Ausführung aus Kunststoff kann zur Abdeckung des Fensters genutzt werden, ohne den Erfassungsbereich zumindest in der zu dem Benutzer hin gewandten Richtung zu beeinträchtigen.

Der Träger ist bevorzugt aus einem Kunststoff ausgebildet. Durch Spritzguss kann kostengünstig eine praktisch beliebig geformte, komplexe Struktur hergestellt werden, die zur Realisierung der Aufnahmeabschnitte geeignet ist.

Zur Rückbewegung des Griffteils aus einer betätigten Stellung in eine Neutralstellung kann eine Rückholfedereinheit an einer dem Griffteil abgewandten Seite des Trägers angeordnet sein. Die Rückholfedereinheit kann in Form eines kompakten Pakets realisiert werden, welches als Modul an dem Träger angeordnet werden kann.

Bevorzugt ist ein Deckel an einer dem Griffteil abgewandten Seite des Trägers als äußerste Komponente angeordnet und schließt den Träger vollständig. Die zweite Betätigungshandhabe kann damit als vollständige Einheit direkt an die Tür geschraubt werden.

Weiterhin kann der Deckel mindestens eine Gewindebohrung zum Aufnehmen einer Schraube aufweisen, die durch den Träger und mindestens eine dem Griffteil zugewandte Komponente gesteckt ist. Die mindestens eine Komponente kann jegliches der vorangehend genannten Module sein, die die Lagereinrichtung, die Leseeinheit, die Rückholfedereinheit oder anderes umfassen kann. Durch die durchgehende Schraube können die Komponenten zusammengehalten werden.

Schließlich ist besonders vorteilhaft, wenn die mindestens eine Auswerteeinheit dazu ausgebildet ist, bei an der Außenseite befindlichem, identifizierten Transponder einen optischen oder akustischen Hinweis auszugeben. Dies kann ein zumindest kurzzeitiges Aufblinken oder das zumindest kurzzeitige Abgeben eines Hinweistons betreffen.

Nachfolgend wird zusammenfassend die Funktion der Auswerteeinheit anhand von drei unterschiedlichen Fällen erläutert.

FALL 1: Ein erster Transponder befindet sich an der Innenseite der Tür und ein zweiter Transponder nähert sich der Außenseite der Tür.

Es wird angenommen, dass sich der erste Transponder in dem zweiten Erfassungsbereich der zweiten Leseeinheit befindet. Ist der erste Transponder ein über einen Knopfdruck aktivierbarer Transponder wird angenommen, dass der erste Transponder (noch) aktiviert ist, etwa durch eine vorherige Öffnung der Tür. Die erste oder die zweite Leseeinheit könnte dann eine Kennung oder ein anderes Identifikationsmerkmal des ersten Transponders einlesen. Es kann sich anbieten, direkt nach dem Einlesen eine Zutrittsberechtigung zu überprüfen. Dies kann dadurch erfolgen, dass die eingelesene Kennung des ersten Transponders mit vorgegebenen, d.h. eingespeicherten, Transponderkennungen verglichen wird. Ist die Kennung des ersten Transponders in einem entsprechenden Datensatz vorhanden, wird dieser als zutrittsberechtigt erkannt. Anschließend oder währenddessen erfolgt eine Positionsbestimmung des ersten Transponders. Hierbei ist davon auszugehen, dass sich der erste Transponder in einer breiten Überlappung des ersten und des zweiten Erfassungsbereichs befindet. Befindet sich der an der Innenseite befindliche erste Transponder also nicht unmittelbar an einer von der Tür beabstandeten inneren Grenze des zweiten Erfassungsbereichs, kann er mit hoher Wahrscheinlichkeit auch in den ersten Erfassungsbereich fallen. Bei einer Aufnahme einer Funkverbindung auf beiden Seiten der Tür, d.h. durch die erste Leseeinheit und die zweite Leseeinheit, kann zur Positionsbestimmung ein die Entfernung bestimmender Parameter ermittelt werden. Dies ist etwa die Feld- oder Signalstärke eines von dem ersten Transponder an die Leseeinheiten gesendeten Signals oder die Leseeinheiten können jeweils eine Abstandsbestimmung durch Auswertung von Signallaufzeiten durchführen. Ist für jedes Paar aus Leseeinheit und erstem Transponder ein solcher Parameter ermittelt, kann durch Vergleich herausgefunden werden, auf welcher Seite sich der Transponder befindet. In diesem Fall würde die Auswerteeinheit ermitteln, dass der Transponder sich an der Innenseite befindet. Wird ein Sensor zum Erfassen eines Objekts in dem dritten Erfassungsbereich verwendet, würde dessen Aktivierung unterbleiben.

Nähert sich nun der zweite Transponder auf der Außenseite an die erste Betätigungshandhabe, wird dieser von einer der beiden Leseeinheiten und bevorzugt der ersten Leseeinheit ausgelesen und eventuell als zutrittsberechtigter Transponder identifiziert. Der zweite Transponder kann in diesem Beispiel bei ausreichender Annäherung weiterhin auch bevorzugt von der ersten Leseeinheit ausgelesen werden. Durch wie vorangehend geschilderte Bestimmung der Position des zweiten Transponders wird erkannt, dass sich der zweite Transponder an der Außenseite befindet, während der erste Transponder an der Innenseite angeordnet ist. Wird ein Sensor zum Erfassen eines Objekts in dem dritten Erfassungsbereich verwendet, würde dessen Aktivierung erst durch Annäherung des zweiten Transponders erfolgen und die Öffnung der Tür durch Generieren und Aussenden des Türöffnungssignals kann veranlasst werden.

FALL 2: Es befindet sich kein Transponder an der Innenseite, jedoch nähert sich ein Transponder an der Außenseite.

Bei ausreichender Annäherung des Transponders an die erste Betätigungshandhabe erfolgt das Einlesen einer Transponderkennung und es wird versucht, den Transponder zu identifizieren. Ist die Identifizierung erfolgreich, d.h. der Transponder ist zutrittsberechtigt, wird ein Türöffnungssignal generiert, um die Öffnung des Motorschlosses zu initiieren. Im Falle der Verwendung des Sensors zum Erfassen eines Objekts in dem dritten Erfassungsbereich würde dieser folglich aktiviert werden und auf eine Betätigung durch einen Benutzer warten. Dies kann einhergehen mit einer Aktivierung der Leuchteinheit, so dass ein Benutzer direkt informiert wird, dass eine entsprechende Eingabe erwartet wird, um das Türöffnungssignal dem Motorschloss zu übersenden.

FALL 3: Ein Transponder befindet sich ausschließlich an der Innenseite.

In diesem Fall könnte zwar ein zutrittsberechtigter Transponder identifiziert werden, doch das Generieren und Senden eines Türöffnungssignals bleibt aus, nachdem die Position des Transponders an der Innenseite der Tür festgestellt wird. Es ist bevorzugt, dass die Tür ohne Transponder durch Betätigen der zweiten Betätigungshandhabe geöffnet werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Zutrittssystem in einer stark vereinfachten, schematischen Darstellung;
- Fig. 2a, 2b und 2c: eine erste Betätigungshandhabe an einer Tür;
- Fig. 3: einen teiltransparenten Ausschnitt aus einer ersten Betätigungshandhabe mit einer darin integrierten ersten Leseeinheit;
- Fig. 4a und 4b: eine erste Leseeinheit mit einem Gehäuse und elektrischen Leitungen in zwei unterschiedlichen Ansichten;
- Fig. 5a bis 5c: unterschiedliche Querschnittsvarianten der ersten Betätigungshandhabe in Darstellungen, die eine aktive Fläche der ersten Leseeinheit zeigen;
- Fig. 6a und 6b: einen Abschnitt der ersten Betätigungshandhabe mit darin installiertem Sensor;
- Fig. 7a und 7b: Explosionsdarstellungen einer zweiten Baueinheit mit Sensor und Leuchteinheit;
- Fig. 8: eine Explosionsdarstellung einer zweiten Betätigungshandhabe;
- Fig. 9: eine zweite Betätigungshandhabe in einem Zusammenbau; und
- Fig. 10: ein Zutrittssystem in einer weiteren schematischen Darstellung.

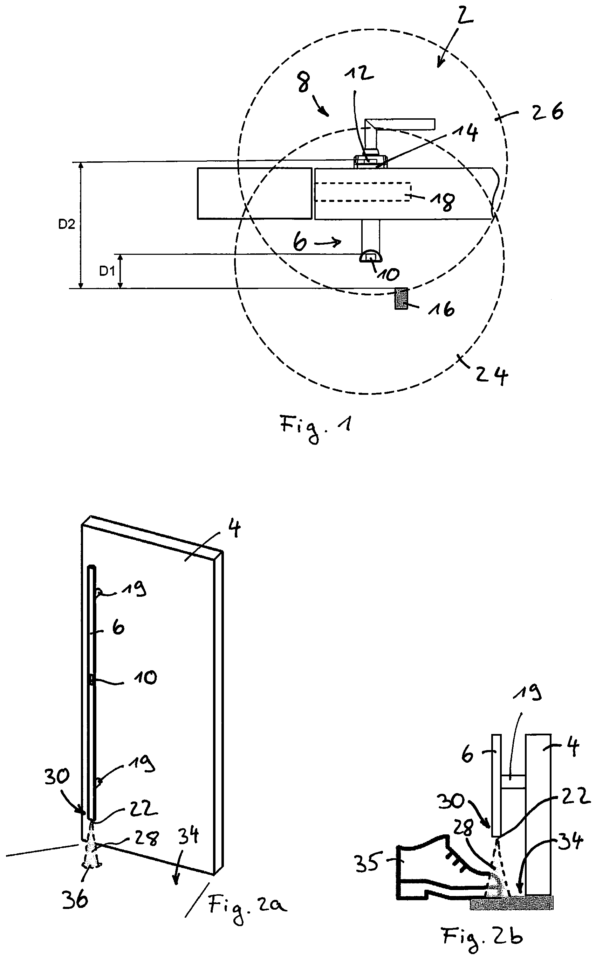

Fig. 1 zeigt eine sehr schematische Darstellung eines Zutrittssystems 2 in Form einer Draufsicht auf eine Oberseite einer Tür 4, an der eine erste Betätigungshandhabe 6 an einer Außenseite sowie eine zweite Betätigungshandhabe 8 an einer Innenseite angeordnet ist. Beide Betätigungshandhaben 6 und 8 sind mit einem Zutrittskontrollsystem ausgestattet, welches in Fig. 1 nicht als ein einzelnes Element gekennzeichnet ist, sondern durch die Zusammenwirkung einzelner Komponenten entsteht. Die erste Betätigungshandhabe 6 weist eine erste Leseeinheit 10 auf, die exemplarisch direkt in die erste Betätigungshandhabe 6 integriert ist. Die zweite Betätigungshandhabe 8 weist indes eine zweite Leseeinheit 12 auf, die ebenso exemplarisch direkt in die zweite Betätigungshandhabe 8 integriert ist. Zusätzlich ist eine Auswerteeinheit 14 vorgesehen, die beispielhaft in der zweiten Betätigungshandhabe 8 angeordnet ist.

Die Auswerteeinheit 14 ist mit der ersten Leseeinheit 10 und der zweiten Leseeinheit 12 gekoppelt. Sie ist dazu ausgebildet, zu ermitteln, ob sich ein über die erste Leseeinheit 10 und/oder die zweite Leseeinheit 12 ausgelesener und in der Auswerteeinheit 14 identifizierter Transponder an der Innenseite oder der Außenseite der Tür 4 befindet. Es ist vorgesehen, ein Türöffnungssignal zu generieren, wenn ein identifizierter Transponder an der Außenseite lokalisiert ist. Bei ausschließlich an der Innenseite der Tür angeordneten Transpondern unterbleibt das Generieren des Türöffnungssignals. Die Priorität der Öffnung der Tür liegt folglich auf einer Bedienung der Außenseite.

Exemplarisch ist ein Transponder 16 dargestellt, der sich an der Außenseite befindet und aufgrund der Ausgestaltungen der ersten Leseeinheit 10 und der zweiten Leseeinheit 12 exemplarisch in die Erfassungsbereiche beider Leseeinheiten 10 und 12 fällt. Die Auswerteeinheit 14 ist dazu ausgebildet, einen Abstand D1 von der ersten Leseeinheit 10 zu dem Transponder 16 und einen Abstand D2 von der zweiten Leseeinheit 14 zu dem Transponder 16 zu ermitteln. Dies könnte durch Ermittlung einer Feld- oder Signalstärke eines von dem Transponder 16 ausgesandten Antwortsignals erfolgen. Alternativ dazu wäre denkbar, eine Signallaufzeit zu ermitteln. Durch die Ermittlung der Abstände D1 und D2 kann die Auswerteeinheit 14 feststellen, ob sich der Transponder 16 an der Außenseite oder der Innenseite der Tür 4 befindet. Ist der Abstand D1 geringer als D2, spricht dies für eine Positionierung an der Außenseite. Ist allerdings der Abstand D2 geringer als D1, ist der Transponder 16 sehr wahrscheinlich an der Innenseite positioniert. An dieser Stelle sei darauf hingewiesen, dass die Auswerteeinheit 14 nicht unbedingt in der Lage sein muss, konkrete Abstandswerte zu berechnen. Vielmehr würde es ausreichen, Parameter zu ermitteln, die von dem Abstand des Transponder 16 und den jeweiligen Leseeinheiten 10 und 12 abhängen. Diese abstandsabhängigen Parameter können dann miteinander verglichen werden.

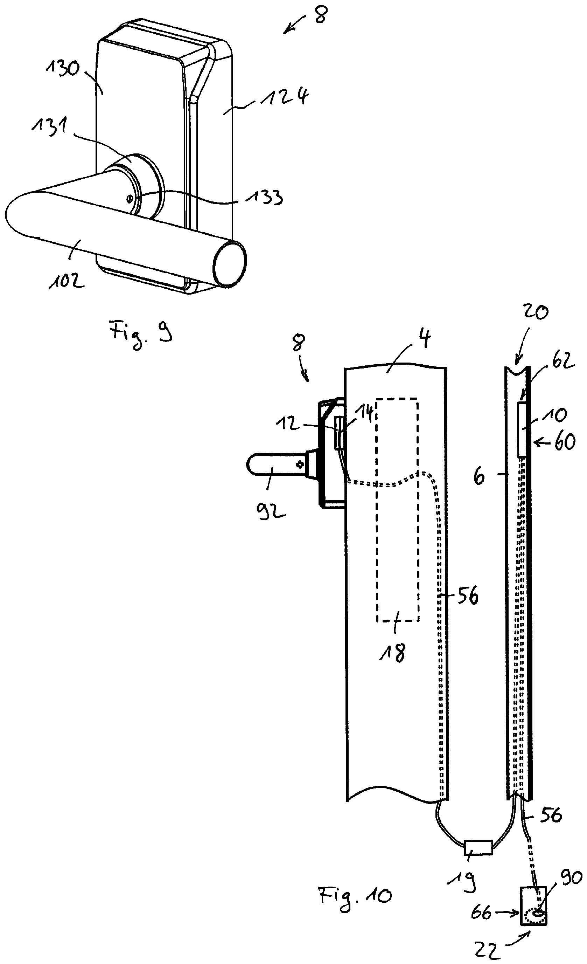

Das Türöffnungssignal kann zur Betätigung eines Motorschlosses 18 eingesetzt werden, welches beispielsweise direkt in der Tür 4 angeordnet ist. Eine erweiterte Ansicht des Zutrittssystems 2 wird in Fig. 10 gezeigt.

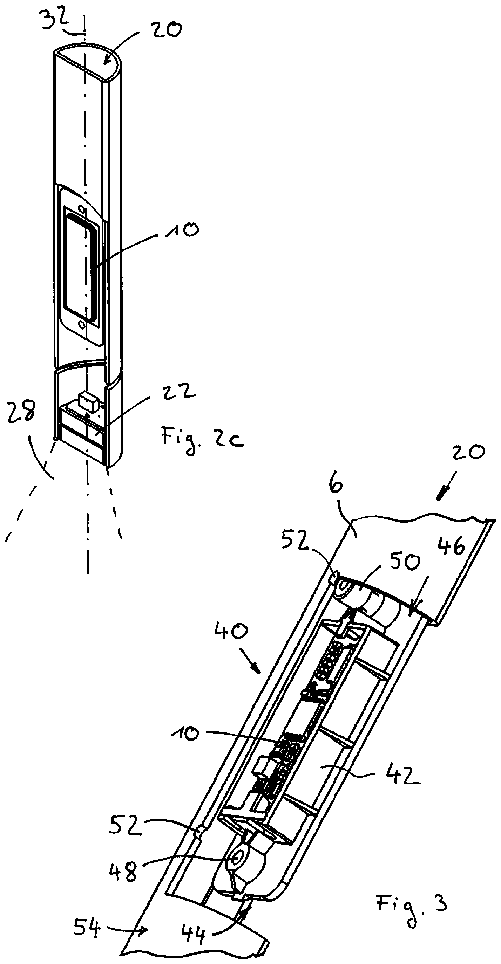

Fig. 2a zeigt eine Außenseite der Tür 4, die beispielhaft als eine Haustür ausgeführt ist. An dieser ist die erste Betätigungshandhabe 6 angeordnet, die in Form eines stangenförmigen Griffs ausgeführt und senkrecht an der Tür 4 ausgerichtet ist. Zur Befestigung können sich zu der Tür 4 und der ersten Betätigungshandhabe 6 quer verlaufende Halter 19 eignen. Es bietet sich an, zwei oder mehr solcher Halter 19 einzusetzen, die entlang der Länge der ersten Betätigungshandhabe 6 verteilt sind. Die erste Betätigungshandhabe 6 weist einen in Fig. 2c angedeuteten Hohlraum 20 auf, in dem sich die erste Leseeinheit 10 und ein Sensor 22 befinden.

Die erste Leseeinheit 6 und der Sensor 22 sind die an der Außenseite der Tür 4 angeordneten Komponenten eines Zutrittskontrollsystems, die eine Betätigung des Motorschlosses 18 oder einer ähnlichen Einrichtung von außerhalb der Tür 4 erlauben. Es ist dazu vorgesehen, durch Auslesen und Identifizieren von Transpondern 16 und durch anschließendes Erfassen eines Objekts durch den Sensor 22 das Öffnen des Motorschlosses zu initiieren.

Zum Einlesen eines Transponders weist die erste Leseeinheit 6 einen ersten Erfassungsbereich 24 auf, in welchem ein von einem Benutzer mitgeführter Transponder ausgelesen werden kann. Die in Fig. 1 gezeigte zweite Leseeinheit 12 weist analog dazu einen zweiten Erfassungsbereich 26 auf. Diese können sich je nach Ausführung der Leseeinheiten 10 und 12 mehr oder weniger überschneiden.

Der Sensor 22 weist einen dritten Erfassungsbereich 28 auf, in dem nach Identifizierung eines für die Öffnung berechtigten Transponders an der Außenseite der Tür 4 die Anwesenheit eines Objekts erfasst werden kann. Der Sensor 22 kann im weitesten Sinne als Eingabemittel verstanden werden, das durch eine Geste mit einem Fuß oder der Hand auslösbar ist und zur tatsächlichen Ansteuerung der Öffnung des Motorschlosses 18, etwa durch Freigabe oder Bestätigung zum Senden eines von der Auswerteeinheit 14 generierten Türöffnungssignals, dient.

In der gezeigten Darstellung der ersten Betätigungshandhabe 6 kann sich der dritte Erfassungsbereich 28 von einem ersten Ende 30 als erster Abschnitt der ersten Betätigungshandhabe 6 nach außen erstrecken. Der dritte Erfassungsbereich 28 konzentriert sich beispielhaft auf einen etwa zylindrischen, kegligen oder keulenförmigen Bereich, der sich von dem Sensor 22 nach außen erstreckt. Hierbei wird durch die Ausrichtung des Sensors 22 eine Erstreckungsrichtung des dritten Erfassungsbereichs 28 erzeugt, die beispielhaft im Wesentlichen mit einer Haupterstreckungsachse 32 der ersten Betätigungshandhabe 6 zusammenfällt. Bei der gezeigten Darstellung reicht der dritte Erfassungsbereich 28 folglich von einem unteren Ende der ersten Betätigungshandhabe 6 bis zu einem Boden 34 vor der Tür 4. Tritt in diesem dritten Erfassungsbereich 28 ein Objekt ein, das in einer Detaildarstellung in Fig. 2b beispielhaft als ein Fuß bzw. Schuh 35 dargestellt ist, kann dies durch den Sensor 22 erkannt werden.

Um einem Benutzer intuitiv den dritten Erfassungsbereich 28 und die Aktivierung des Sensors 22 anzuzeigen, ist eine Leuchteinheit (hier nicht gezeigt) vorhanden, die einen Lichtfleck 36 auf den Boden 34 projiziert. Die Ausgestaltungen der vorangehenden genannten Komponenten werden anhand der weiter nachfolgenden Figuren näher erläutert.

Fig. 3 zeigt einen Ausschnitt der ersten Betätigungshandhabe 6, in der die erste Leseeinheit 10 integriert ist. Exemplarisch weist die erste Betätigungshandhabe 6 einen Querschnitt auf, der auf einer Seite gekrümmt, auf der anderen Seite jedoch abgeflacht ist. Eine gekrümmte Seite 54 kann in einem eingebauten Zustand zu der Tür 4 gewandt werden, während eine abgeflachte Seite 38 dann von der Tür 2 weg weist. Selbstverständlich wäre es möglich, die erste Betätigungshandhabe 6 auch mit einem anderen Querschnitt auszuführen.

In dieser Darstellung ist ersichtlich, dass die erste Leseeinheit 6 in Form einer geschlossenen Baueinheit, welche nachfolgend als erste Baueinheit 40 bezeichnet wird, in die erste Betätigungshandhabe 6 integriert ist. Diese erste Baueinheit 40 weist ein erstes Gehäuse 42 auf, das die erste Leseeinheit 6 umgibt. An zwei Enden 44 und 46 sind jeweils Gewindebohrungen 48 vorgesehen, in die Schrauben 50 eingeschraubt sind. Zusätzlich dazu weist die erste Betätigungshandhabe 6 auf ihrer gekrümmten Seite 54 jeweils in Fluchtung mit den Gewindebohrungen 48 positionierte Durchgangsbohrungen 52 auf, durch die ein Benutzer ein Werkzeug zum Drehen der Schrauben 50 einführen kann. Werden die Schrauben 50 aus der jeweiligen Gewindebohrung 48 herausgeschraubt, stoßen sie an eine Innenseite der ersten Betätigungshandhabe 6 und verklemmen dabei folglich das erste Gehäuse 42 in dem Hohlraum 20. Dadurch wird nicht nur eine sichere Befestigung der ersten Leseeinheit 10 gewährleistet, sondern auch eine einfache Demontagemöglichkeit.

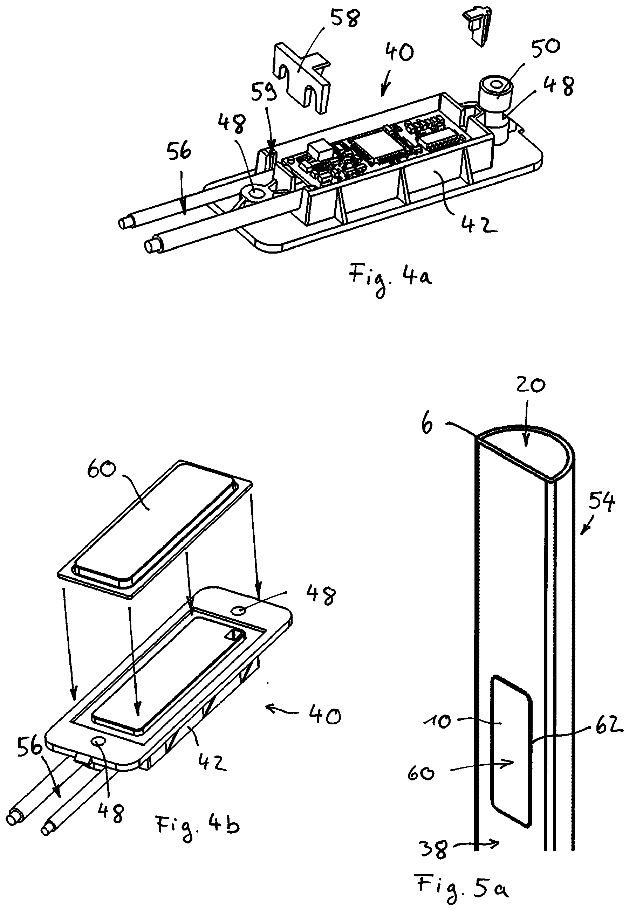

Fig. 4a zeigt die erste Baueinheit 40 in einer vergrößerten Darstellung. Hier ist ersichtlich, dass das erste Gehäuse 42 deutlich größer dimensioniert ist, als für die eigentliche Unterbringung der ersten Leseeinheit 10 erforderlich. Es werden elektrische Anschlussleitungen 56 gezeigt, die aus dem Inneren des ersten Gehäuses 42 nach außen geführt werden. Beispielhaft existieren hierfür Kerben 59 zum Einlegen der Anschlussleitungen 56 und eine in das erste Gehäuse 42 einsteckbare Klammer 58 zum Fixieren der Anschlussleitungen 56 an dem ersten Gehäuse 42. Es ist vorgesehen, zum Abdichten der ersten Leseeinheit 10 und zum Kapseln der gesamten ersten Baueinheit 40 das erste Gehäuse 42 mit einem Vergussharz zu füllen. Dadurch wird die erste Leseeinheit 10 irreversibel vollständig von einer wasserdichten Hülle umgeben und ist robust vor mechanischen Fremdeinwirkungen geschützt. Bei dem Vorgang des Ausgießens des ersten Gehäuses 42 dient die Klammer 58 zur Abdichtung des ersten Gehäuses 42. Das erste Gehäuse 42 kann im Wesentlichen eine Wannenform aufweisen, bei der eine Seite offen ist und alle übrigen Seiten geschlossen oder verschließbar sind.

Die erste Leseeinheit 10 kann eine dedizierte, aktive Oberfläche 60 aufweisen, die in Fig. 4b an einem Deckel gezeigt ist, die bei der Integration in die erste Betätigungshandhabe 6 möglichst nicht zu verdecken ist, um eine ausreichende Reichweite beizubehalten. Die aktive Oberfläche 60, welche auch als Sichtfläche bezeichnet werden könnte, ragt aus dem ersten Gehäuse 42 heraus. Es ist vorteilhaft, wenn die aktive Oberfläche 60 in einem entsprechenden Ausschnitt der ersten Betätigungshandhabe 6 liegt.

Fig. 5a zeigt einen Teilabschnitt der ersten Betätigungshandhabe 6 in einer dreidimensionalen Darstellung. Hier ist insbesondere ein Ausschnitt 62 erkennbar, der die erste Betätigungshandhabe 6 auf ihrer abgeflachten Seite 38 durchsetzt. In diesen kann rückwärtig die aktive Fläche 60 der ersten Leseeinheit 10 eingebracht werden. Es sei an dieser Stelle bemerkt, dass die aktive Fläche 60 bevorzugt derart an der ersten Baueinheit 40 angeordnet ist, dass die abgeflachte Seite 38 und die aktive Fläche 60 bündig zueinander angeordnet sind und flächenbündig abschließen. Dadurch kann eine harmonische Oberflächengestaltung erreicht werden, die eine wertige Optik der ersten Betätigungshandhabe 6 nicht stört.

Es kann weiterhin vorgesehen sein, einen zusätzlichen Dichtring 64 zwischen der aktiven Fläche 60 und dem Ausschnitt 62 vorzusehen. Dieser könnte derart ausgestaltet sein, dass der an dem Ausschnitt 62 sichtbare Teil des Dichtrings 64 schmaler ist als im Innern des Hohlraums 20, so dass sich dieser beim Festklemmen der ersten Baueinheit 40 von innen an den Ausschnitt 62 drückt, durch die Ausgestaltung jedoch nicht durchtreten kann und damit ein bündiges Erscheinungsbild mit dem Dichtring 64 erreicht wird.

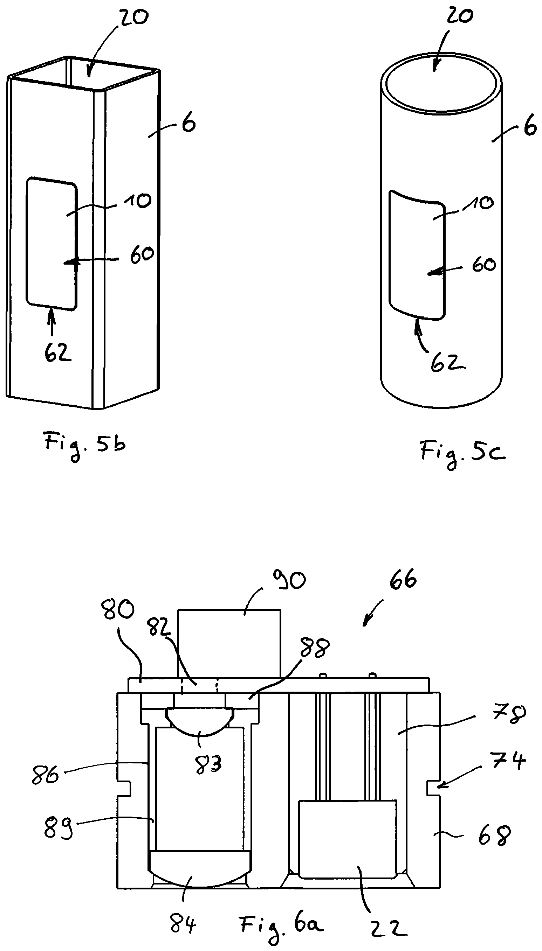

Wie vorangehend bereits dargelegt kann die erste Betätigungshandhabe 6 unterschiedliche Formen aufweisen, die in den Figuren 5b und 5c dargestellt werden. Fig. 5b zeigt eine erste Betätigungshandhabe 6 mit einem im Wesentlichen quadratischen Querschnitt. Fig. 5c zeigt indes einen klassischen, vollständig zylindrisch ausgeführten Querschnitt, wie er bei Stangengriffen oft eingesetzt wird. Während die aktive Fläche 60 der Varianten aus Figuren 5a und 5b gleichartig gestaltet sein können, wird bei der Variante in Fig. 5c eine gebogene Ausführung der aktiven Fläche 60 eingesetzt.

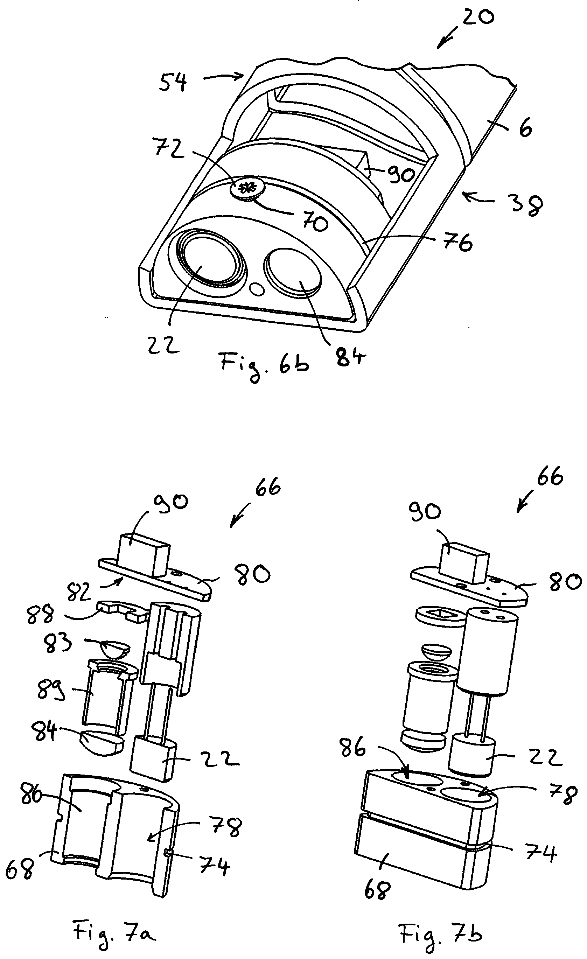

Die Figuren 6a und 6b zeigen eine zweite Baueinheit 66, die an dem ersten Ende 16 der ersten Betätigungshandhabe 6 zu positionieren ist und den darin angeordneten Sensor 22 aufweist. Hier ist ein zweites Gehäuse 68 vorgesehen, dass an den Hohlraum 20 der ersten Betätigungshandhabe 6 angepasst ist. Es kann folglich durch eine Öffnung in dem ersten Ende 30 in die erste Betätigungshandhabe 6 eingeschoben werden. Zum Befestigen ist auch hier eine Gewindebohrung 70 vorgesehen, in der eine Schraube 72 angeordnet ist. Diese ist beispielhaft als Senkschraube ausgeführt. Dadurch kann auch das zweite Gehäuse 68 und folglich die zweite Baueinheit 66 in dem Hohlraum 20 der ersten Betätigungshandhabe 6 befestigt werden.

Zum Abdichten des Übergangs zwischen einer Innenwandung der ersten Betätigungshandhabe 6 und der zweiten Baueinheit 66 weist das zweite Gehäuse 68 eine umlaufende Nut 74 auf, in die ein passend geformter Dichtring eingelegt wird. Bei der Ausgestaltung der Nut 74 und des Dichtrings sollte darauf geachtet werden, dass der Dichtring so sicher durch die Nut 74 gehalten wird, dass ein Herauslösen oder Abscheren beim Einstecken der zweiten Baueinheit 66 in den Hohlraum 20 verhindert wird. In Fig. 6b ist ein Dichtring 76 dargestellt, der vollständig in der Nut 74 gehalten wird und sich an der Innenseite des Hohlraums 20 abstützt.

In den Figuren 7a und 7b wird die zweite Baueinheit 66 in einer Explosionsdarstellung mit dem separaten zweiten Gehäuse 68 illustriert. Das zweite Gehäuse 68 weist einen ersten Aufnahmeraum 78 auf, der zur Aufnahme des Sensors 22 ausgebildet ist. Dieser ist beispielhaft an einer Platine 80 angeordnet, welche etwa eine Sensorauswerteschaltung aufweist. Zusätzlich dazu wird gestrichelt eine Leuchteinheit 82 gezeigt, welche sich ebenso auf der Platine 80 beispielhaft befindet und neben dem Sensor 22 angeordnet ist. Diese Leuchteinheit 82 kann elektrisch mit dem Sensor 22 bzw. der Platine 80 gekoppelt sein, so dass bei aktiviertem Sensor 22 auch die Leuchteinheit 82 in Betrieb ist und Licht abgibt.

Zum Bündeln des Lichts ist eine Linse 84 vorgesehen, die in einen zweiten Aufnahmeraum 86 einbringbar ist. Dieser ist neben dem ersten Aufnahmeraum 78 in dem zweiten Gehäuse 68 platziert. Werden der Sensor 22 und die Linse 84 in die zugehörigen Aufnahmeräume 78 und 86 eingebracht, liegt die Platine 80 bündig auf dem zweiten Gehäuse 68 auf. Die Leuchteinheit 82 kann als eine auf der Platine 80 aufgelötete Leuchtdiode realisiert sein, an die sich bereits eine erste Linse 83 anschließt. Beispielhaft kann diese über einen Träger 88 an der Platine 80 angeordnet sein. Die Linse 84, der Träger 88 und die erste Linse 83 können über einen Tubus 89 vormontiert sein.

Beispielhaft ist ein elektrischer Verbinder 90 auf der Platine 80 an einer von dem Sensor 22 und der Leuchteinheit 82 abgewandten Seite platziert. Der Verbinder 90 erlaubt die Kopplung insbesondere mit der Auswerteeinheit 14 oder einem ähnlichen, übergeordneten System. Es ist vorstellbar, dass die Platine 80 bereits eine Sensorauswerteschaltung aufweist, die den Sensor 22 und die Leuchteinheit 82 ansteuert und insbesondere von dem Sensor 22 bereitgestellte Signale oder Daten auswertet. Die Sensorauswerteschaltung ist bevorzugt dazu ausgebildet, aus den Rohsignalen ein in dem dritten Erfassungsbereich befindliches Objekt zu erfassen. Über den elektrischen Verbinder 90 kann dann ein Signal bereitgestellt werden, dass ein entsprechendes Objekt erfasst wurde. Es ist dann nicht notwendig, sämtliche Signale des Sensors 22 an eine übergeordnete Einheit zu senden, um dort die Verarbeitung durchzuführen.

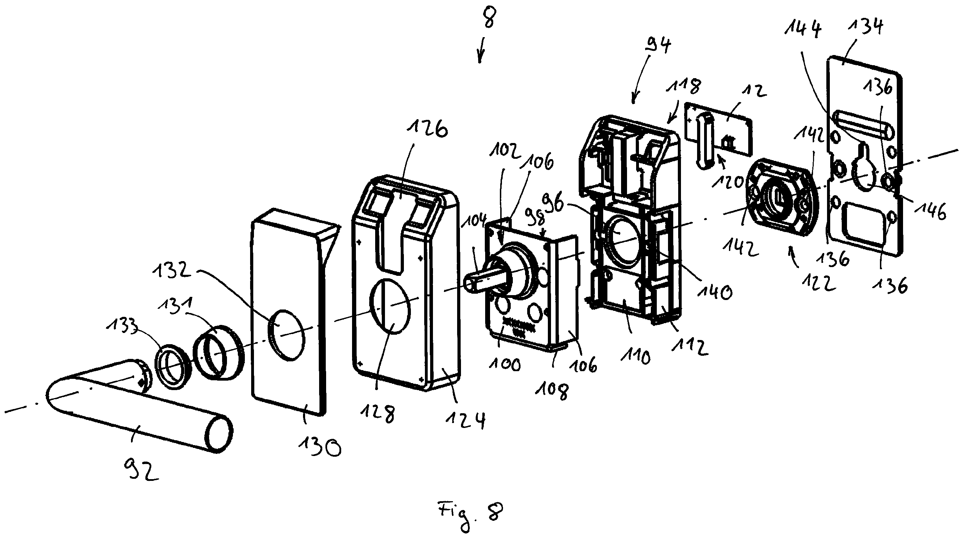

Fig. 8 zeigt die zweite Betätigungshandhabe 8 in einer Explosionsdarstellung. Exemplarisch ist zur Bedienung ein Griffteil 92 vorgesehen, das exemplarisch rechtwinklig ausgebildet ist und wie ein herkömmlicher Türgriff zu bedienen ist.

Die zweite Betätigungshandhabe 8 weist exemplarisch und bevorzugt einen modularen Aufbau auf, wobei als Kernkomponente ein Träger 94 eingesetzt wird. Dieser kann beispielsweise aus einem Kunststoff bestehen und ist dazu gedacht, diverse weitere Komponenten aufzunehmen, so dass aus diesen eine modulare Funktionsbaugruppe gebildet wird. Der Träger 94 weist einen ersten Ausschnitt 96 auf, durch den sich ein Antriebsstift erstrecken kann.

Zunächst ist eine Lagereinrichtung 98 vorgesehen, welche einen Lagerrahmen 100 aufweist, an dem ein Stiftlager 102 zum Lagern eines ersten Antriebsstifts 104 vorgesehen ist. Der Lagerrahmen 100 kann auf einem Blech basieren, welches mehrfach abgekantet ist. Beim Abkanten werden zwei Seitenlaschen 106 gebildet, die im Wesentlichen parallel zueinander verlaufen. An einer Unterseite ist eine Bodenlasche 108 vorgesehen, die im Wesentlichen zwischen den beiden Seitenlaschen senkrecht zu den Seitenlaschen 106 verläuft. Die Laschen 106 und 108 müssen nicht miteinander verbunden sein.

Ein erster Aufnahmeabschnitt 110 des Trägers 94 ist als ein Vorsprung mit zwei Seitenflächen 112 ausgebildet, die mit den Seitenlaschen 106 korrespondierend ausgestaltet sind. Der Lagerrahmen 100 kann folglich auf den ersten Aufnahmeabschnitt 110 aufgesetzt werden, so dass die beiden Seitenlaschen 106 auf den beiden Seitenflächen 112 des Trägers 94 aufgeschoben bzw. aufgelegt sind. Durch eine entsprechende Gestaltung, beispielsweise mit einer Hinterschneidung, federnden Elementen oder anderen Merkmalen, kann eine zumindest temporäre form- oder kraftschlüssige Verbindung zwischen dem Lagerrahmen 100 und dem Träger 94 hergestellt werden.

Das Stiftlager 102 erstreckt sich von dem Lagerrahmen 100 nach außen. Es weist eine radial um eine Mittelachse 114 verlaufende zylindrische Fläche 116 auf, die sich von dem Lagerrahmen 100 in Richtung des Griffteils 92 erstreckt. Das Stiftlager 102 ist beispielhaft durch die zylindrische Fläche 106 begrenzt oder dadurch ausgebildet. Ein entsprechendes, eine zylindrische Außenfläche aufweisendes Wälzlager kann in den von der zylindrischen Fläche 116 umschlossenen Hohlraum eingebracht und befestigt werden. Durch entsprechende Mittel, die hier nicht weiter dargestellt sind, kann der erste Antriebsstift 104 axial unverschieblich an dem Stiftlager 102 gehalten werden.

Auf einer der Lagereinrichtung 98 entgegengesetzten Seite des Trägers 94 ist ein zweiter Aufnahmeabschnitt 118 in Form einer Vertiefung vorgesehen. Der zweite Aufnahmeabschnitt 118 kann die zweite Leseeinheit 12 aufnehmen, welche oberhalb der Mittelachse 114 und insbesondere oberhalb des ersten Ausschnitts 96 angeordnet ist. Die zweite Leseeinheit 12 liegt dann oberhalb der Lagereinrichtung 98 und in einer davon abgewandten Seite des Trägers 94. Wie vorangehend erwähnt kann es sinnvoll sein, die Installationshöhe der ersten Leseeinheit 10 und der zweiten Leseeinheit 12 im Wesentlichen identisch zu realisieren.

Durch die Anordnung der zweiten Leseeinheit 12 auf einer dem Griffteil 92 und der Lagereinrichtung 98 abgewandten Seite des Trägers 94 kann ein Schutz der zweiten Leseeinheit 12 vor mechanischer Beschädigung erreicht werden. Die zweite Leseeinheit 12 weist beispielhaft eine elektrische Anschlussleitung 120 auf, auf die weiter nachfolgend eingegangen wird.

Um eine übliche Bewegung des Griffteils 92 zu ermöglichen ist eine Rückholfedereinheit 122 vorgesehen. Diese weist insbesondere ein hier nicht näher dargestelltes Federpaket auf, dass einer Drehung des durch das Griffteil 92 angetriebenen ersten Antriebsstifts 104 entgegenwirkt. Die Rückholfedereinheit 122 kann mit einem zweiten Antriebsstift (nicht gezeigt) verbunden sein. Allerdings kann der erste Antriebsstift 104 auch so ausgeführt sein, dass er sich bis in die Rückholfedereinheit 122 oder darüber hinaus erstreckt. Die Detailgestaltung kann nach fachüblichen Maßstäben frei gewählt werden. Hierzu ist auch denkbar, dass die Lagereinrichtung 98 auf einer vom Griffteil 92 abgewandten Seite eine Kupplung zum Ankuppeln an den ersten Antriebsstift 104 aufweist. Schließlich sollte durch den ersten Antriebsstift 104 oder einen zweiten Antriebsstift eine Verbindung mit einem hier nicht gezeigten Motorschloss oder einer Fallenmechanik bereitgestellt werden.

Auf einer dem Griffteil 92 zugewandten Seite des Trägers 94 ist ein erstes Verkleidungselement 124 vorgesehen, welches beispielsweise aus einem metallischen Material ausgebildet ist. Um der zweiten Leseeinheit 12 einen optimalen Erfassungsbereich zu gewährleisten, weist das erste Verkleidungselement 124 auf einer oberhalb der Mittelachse 114 liegenden Seite ein Fenster 126 auf. Dieses stellt eine Öffnung dar, die mit der Ausrichtung der zweiten Leseeinheit 12 fluchtet. Insgesamt ist das erste Verkleidungselement 124 wannenförmig ausgebildet, so dass der Träger 94 mit darauf angeordneter Lagereinrichtung 98 vollständig umschlossen und nach außen hin abgedeckt wird. Selbstverständlich ist hierzu ein zweiter Ausschnitt 128 vorgesehen, durch den sich das Stiftlager 102 nach außen hin erstreckt. Im Bereich des Fensters 126 sind der Rahmen 94 und das erste Verkleidungselement 124 keilförmig ausgestaltet.

Zur optisch vollständigen Abdeckung ist ein zweites Verkleidungselement 130 vorgesehen, welches insbesondere aus einem Kunststoff ausgebildet ist. Durch den Kunststoff wird das Funksignal zwischen einem Transponder und der zweiten Leseeinheit 12 nicht gestört. Das zweite Verkleidungselement 130 wird auf einer zu dem Griffteil 92 weisenden Seite des ersten Verkleidungselements 124 angeordnet und weist einen dritten Ausschnitt 132 auf, durch den sich das Stiftlager 102 nach außen hin erstrecken kann. Zusätzlich kann eine Rosette 131 zur Abdeckung des Stiftlagers 12 vorgesehen sein. Hieran kann sich eine Toleranzhülse 133 anschließen, durch die das Griffteil 4 führbar ist

Zum Abschluss ist auf einer rückwärtigen Seite der zweiten Betätigungshandhabe 8 ein Deckel 134 vorgesehen, dessen Erstreckung mit der Flächenerstreckung des Trägers 94 zusammenfällt. Hier sind mehrere Gewindebohrungen 136 angeordnet, welche Schrauben (hier nicht gezeigt) aufnehmen können. Diese Schrauben können sich durch Bohrungen 138 in der Lagereinrichtung 98, Bohrungen 140 in dem Träger 98 und Bohrungen 142 in der Rückholfedereinheit 122 erstrecken und in die Gewindebohrungen 136 eingeschraubt werden. Dadurch werden sämtliche Komponenten miteinander fest verbunden. Für die Anschlussleitung 120 ist eine Öffnung 144 vorgesehen, die beispielhaft als Kerbe ausgeformt ist, vorgesehen. Diese schließt sich an einen vierten Ausschnitt 146 zum Durchführen eines Antriebsstifts an.

Fig. 9 zeigt die zweite Betätigungshandhabe 8 in einem Zusammenbau. Hier ist erkennbar, dass das Stiftlager 102 aus dem zweiten Verkleidungselement 130 herausragt und das Griffteil 92 bündig daran zum Aufliegen kommt.

Fig. 10 zeigt schließlich eine weitere, schematische Darstellung des Zutrittssystems 2 aus Fig. 1 unter Berücksichtigung der in den Figuren 2a bis 9 gezeigten Komponenten. Hier werden die Tür 4 mit der ersten Betätigungshandhabe 6 und der zweiten Betätigungshandhabe 8 gezeigt. In der Tür 4 ist, wie bereits in Fig. 1 angedeutet, ein Motorschloss 18 angeordnet. Das Motorschloss 18 kann über ein in der Tür integriertes und hier nicht dargestelltes Kabel mit elektrischer Leistung versorgt werden. Ein solches kann etwa während der Montage der Tür 4 in diese integriert werden und über eine entsprechende Verbindungseinrichtung, beispielsweise an einem oder neben einem Türscharnier, zu einem gebäudefesten Anschluss geführt werden.

Zur Versorgung der Komponenten des Zutrittssystems 2 mit elektrischer Leistung kann die in Fig. 10 gezeigte Verkabelung verwendet werden. Die erste Leseeinheit 10 ist in dem Hohlraum 20 der ersten Betätigungshandhabe 6 integriert. Die in Fig. 4 gezeigten Anschlussleitungen 56 erstrecken sich beispielhaft in dem Hohlraum 20 nach unten und bilden jeweils eine Zweigleitung. Die Anschlussleitungen 56 können als Y-förmige Anordnung vorgesehen sein. Eine der beiden Anschlussleitungen 56 ist mit der zweiten Baueinheit 66 bzw. dem Sensor 22 verbunden. Durch diese Anschlussleitungen 56 kann der Sensor 22 mit elektrischer Leistung versorgt werden. Zusätzlich kann auch vorgesehen sein, eine Daten- oder Signalübertragung zu der ersten Leseeinheit 10 zu realisieren.

Die zweite Anschlussleitung 56 ist ebenfalls durch den Hohlraum 20 nach unten geführt und kann über einen Halter 19 in die Tür 4 und dort zu dem Motorschloss 18 geführt werden. Diese Variante kommt insbesondere dann in Betracht, wenn die erste Betätigungshandhabe 6 einen stangenförmigen Griff aufweist, welcher an Stellen befestigt ist, die relativ weit von der Installationshöhe der ersten Leseeinheit 10 beanstandet sind. Durch das Führen der Anschlussleitungen 56 in das Motorschloss 18 können folglich die erste Leseeinheit 10 und der Sensor 22 mit Strom versorgt werden. Zusätzlich dazu kann eine Verbindung zu der zweiten Leseeinheit 12 bzw. der exemplarisch ausschließlich in der zweiten Betätigungshandhabe 8 angeordneten Auswerteeinheit 14 erfolgen. Dadurch stehen sämtliche Komponenten miteinander in Verbindung, um die an das Zutrittssystem 2 gestellte Aufgabe zu erfüllen.

Die Signal- oder Datenverbindung zwischen der Auswerteeinheit 14 und der ersten Leseeinheit 10 bzw. dem Sensor 22 oder anderen Komponenten der zweiten Baueinheit 66 muss nicht zwangsläufig über eine drahtgebundene Verbindung erfolgen. Vielmehr ist auch denkbar, aufgrund der bevorzugt permanent anliegenden Stromversorgung beider Betätigungshandhaben 6 und 8 eine drahtlose Kommunikation einzusetzen. Hierzu sind entsprechende Sende- und Empfangsmodule einsetzbar. Dies senkt die Komplexität in dem Türaufbau bzw. der Verkabelung des Motorschlosses 18 und kann weiterhin durch in die Betätigungshandhaben 6 und 8 integrierbare, aufrüstbare Funkmodule realisiert werden. Diese könnten weiterhin eine einfache Verbindung mit einem in dem Gebäude installierten Bus- oder Kommunikationssystem realisieren. Weiterhin wäre leicht möglich, die Auswerteeinheit 14 an einer anderen Stelle anzuordnen, die von den eigentlichen Betätigungshandhaben 6 und 8 entfernt ist.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 2 | Zutrittssystem | 59 | Kerbe |
| 4 | Tür | 60 | aktive Oberfläche |
| 6 | erste Betätigungshandhabe | 62 | Ausschnitt |
| 8 | zweite Betätigungshandhabe | 64 | Dichtring |
| 10 | erste Leseeinheit | 66 | zweite Baueinheit |
| 12 | zweite Leseeinheit | 68 | zweites Gehäuse |
| 14 | Auswerteeinheit | 70 | Gewindebohrung |
| 16 | Transponder | 72 | Madenschraube |
| 18 | Motorschloss | 74 | Nut |
| 19 | Halter | 76 | Dichtring |
| 20 | Hohlraum | 78 | erster Aufnahmeraum |
| 22 | Sensor | 80 | Platine |
| 24 | erster Erfassungsbereich | 82 | Leuchteinheit |
| 26 | zweiter Erfassungsbereich | 83 | erste Linse |
| 28 | dritter Erfassungsbereich | 84 | Linse |
| 30 | erstes Ende / erster Abschnitt | 86 | zweiter Aufnahmeraum |
| 32 | Haupterstreckungsachse | 88 | Träger |
| 34 | Boden | 89 | Tubus |
| 35 | Objekt | 90 | elektrischer Verbinder |
| 36 | Lichtfleck | 92 | Griffteil |
| 38 | abgeflachte Seite | 94 | Träger |
| 40 | erste Baueinheit | 96 | erster Ausschnitt |
| 42 | erstes Gehäuse | 98 | Lagereinrichtung |
| 44 | ein Ende des ersten Gehäuses | 100 | Lagerrahmen |
| 46 | ein anderes Ende des ersten Gehäuses | 102 | Stiftlager |
| | | 104 | erster Antriebsstift |
| 48 | Gewindebohrung | 106 | Seitenlasche |
| 50 | Schraube | 108 | Bodenlasche |
| 52 | Durchgangsbohrung | 110 | erster Aufnahmeabschnitt |
| 54 | gekrümmte Seite | 112 | Seitenfläche |
| 56 | elektrische Anschlussleitung / Kabel | 114 | Mittelachse |
| 58 | Klammer | 116 | zylindrische Fläche |
| 118 | zweiter Aufnahmeabschnitt | 133 | Toleranzhülse |
| 120 | elektrische Anschlussleitung | 134 | Deckel |
| 122 | Rückholfedereinheit | 136 | Gewindebohrung |
| 124 | erstes Verkleidungselement | 138 | Bohrung |
| 126 | Fenster | 140 | Bohrung |
| 128 | zweiter Ausschnitt | 142 | Bohrung |
| 130 | zweites Verkleidungselement | 144 | Öffnung |
| 131 | Rosette | 146 | vierter Ausschnitt |
| 132 | dritter Ausschnitt | | |

## Patentansprüche

1. Zutrittssystem (2), aufweisend eine erste Betätigungshandhabe (6) zur Befestigung an einer Außenseite einer Tür (4), eine zweite Betätigungshandhabe (6) zur Befestigung an einer Innenseite der Tür (4), und ein Zutrittskontrollsystem mit mindestens einer Leseeinheit (10, 12) zum Auslesen eines Transponders (16) und mindestens eine Auswerteeinheit (14), welche mit der mindestens einen Leseeinheit (10, 12) gekoppelt ist und dazu ausgebildet ist, einen ausgelesenen Transponder zu identifizieren, **dadurch gekennzeichnet, dass** eine erste Leseeinheit (10) zur Anordnung an der Außenseite der Tür (4) und eine zweite Leseeinheit (12) zur Anordnung an der Innenseite der Tür (4) vorgesehen sind, und dass die mindestens eine Auswerteeinheit (14) dazu ausgebildet ist, zu ermitteln, ob sich ein über die erste Leseeinheit (10) und/oder die zweite Leseeinheit (12) ausgelesener und in der mindestens einen Auswerteeinheit (14) identifizierter Transponder (16) an der Innenseite oder der Außenseite der Tür (4) befindet und, bei an der Außenseite befindlichem, identifizierten Transponder (16), ein Türöffnungssignal zu generieren.

2. Zutrittssystem (2) nach Anspruch 1, **dadurch gekennzeichnet, dass** die mindestens eine Auswerteeinheit (14) dazu ausgebildet ist, den Abstand durch Auswertung einer gemessenen Signalstärke oder Signallaufzeit eines Antwortsignals des Transponders an den Leseeinheiten (10, 12) zu ermitteln.

3. Zutrittssystem (2) nach Anspruch 1 oder 2, **dadurch gekennzeichnet, dass** die erste Leseeinheit (10) und die zweite Leseeinheit (12) mit einer gemeinsamen Auswerteeinheit (14) gekoppelt sind.

4. Zutrittssystem (2) nach einem der vorhergehenden Ansprüche, **dadurch gekennzeichnet, dass** sich die Einbauhöhen der ersten Leseeinheit (10) und der zweiten Leseeinheit (12) um höchstens 7 cm voneinander unterscheiden.

5. Zutrittssystem (2) nach einem der vorhergehenden Ansprüche, **dadurch gekennzeichnet, dass** die erste Leseeinheit (10) in die erste Betätigungshandhabe (6) integriert ist.

6. Zutrittssystem (2) nach einem der vorhergehenden Ansprüche, **dadurch gekennzeichnet, dass** ein mit der mindestens einen Auswerteeinheit (14) gekoppelter Sensor (22) zum Erfassen eines Objekts (35), das sich in einem durch den Sensor (22) definierten dritten Erfassungsbereich (28) befindet, in die erste Betätigungshandhabe (6) integriert ist, wobei der Sensor (22) an einem ersten Abschnitt (32) der ersten Betätigungshandhabe (6) angeordnet ist und sich der dritte Erfassungsbereich (28) von dem ersten Abschnitt nach außen erstreckt, und wobei die mindestens eine Auswerteeinheit (14) dazu ausgebildet ist, zum Generieren des Türöffnungssignals den Sensor (22) zu aktivieren und das Türöffnungssignal erst nach Erfassen eines Objekts (35) in dem dritten Erfassungsbereich (28) auszusenden.

7. Zutrittssystem (2) nach Anspruch 6, **dadurch gekennzeichnet, dass** die erste Betätigungshandhabe (6) zumindest abschnittsweise stangenförmig ausgebildet ist, ein erstes Ende (32) und ein dem ersten Ende gegenüberliegendes zweites Ende aufweist, wobei sich der erste Abschnitt (32) an dem ersten Ende (32) befindet.

8. Zutrittssystem (2) nach Anspruch 6 oder 7, **dadurch gekennzeichnet, dass** die erste Betätigungshandhabe (6) eine Haupterstreckungsachse (32) aufweist und der dritte Erfassungsbereich (28) parallel zu der Haupterstreckungsachse (32) verläuft.

9. Zutrittssystem (2) nach einem der Ansprüche 6 bis 8, **dadurch gekennzeichnet, dass** der Sensor (22) ein Ultraschall-Sensor ist.

10. Zutrittssystem (2) nach Anspruch 4 und einem der Ansprüche 6 bis 9, **dadurch gekennzeichnet, dass** die erste Leseeinheit (10) in einem ersten Gehäuse (42) angeordnet ist und eine erste Baueinheit (40) bildet.

11. Zutrittssystem (2) nach einem der Ansprüche 6 bis 10, **dadurch gekennzeichnet, dass** der Sensor (22) und die erste Leseeinheit (10) über ein Kabel (56) miteinander verbunden sind, wobei das Kabel (56) eine Zweigleitung aufweist, die mit der zweiten Leseeinheit (12) gekoppelt ist.

12. Zutrittssystem (2) nach einem der Ansprüche 6 bis 11, **dadurch gekennzeichnet, dass** die erste Betätigungshandhabe (6) ferner eine Leuchteinheit (82) aufweist, die während des Vorgangs des Erfassens Licht in Richtung des dritten Erfassungsbereichs (28) abgibt.

13. Zutrittssystem (2) nach Anspruch 12, **dadurch gekennzeichnet, dass** die Leuchteinheit (82) mit dem Sensor (22) gekoppelt ist.

14. Zutrittssystem (2) nach einem der vorhergehenden Ansprüche, **dadurch gekennzeichnet, dass** die mindestens eine Auswerteeinheit (14) dazu ausgebildet ist, bei an der Außenseite befindlichem, identifizierten Transponder (16) einen optischen oder akustischen Hinweis auszugeben.
